(19) Europäisches Patentamt
European Patent Office
Office européen des brevets

(11) **EP 4 443 230 A1**

(12) **EUROPEAN PATENT APPLICATION**
published in accordance with Art. 153(4) EPC

(43) Date of publication:
**09.10.2024 Bulletin 2024/41**

(51) International Patent Classification (IPC):
**G02F 1/37** *(2006.01)*     **B23K 26/062** *(2014.01)*

(21) Application number: **22900979.0**

(52) Cooperative Patent Classification (CPC):
**B23K 26/062; G02F 1/37**

(22) Date of filing: **26.10.2022**

(86) International application number:
**PCT/JP2022/039965**

(87) International publication number:
**WO 2023/100546 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 JP 2021194049**

(71) Applicant: **NIKON CORPORATION**
**Minato-ku**
**Tokyo 108-6290 (JP)**

(72) Inventor: **TOKUHISA, Akira**
**Tokyo 108-6290 (JP)**

(74) Representative: **Hoffmann Eitle**
**Patent- und Rechtsanwälte PartmbB**
**Arabellastraße 30**
**81925 München (DE)**

(54) **PULSED LIGHT GENERATION DEVICE, PULSED LIGHT GENERATION METHOD, AND PROCESSING DEVICE**

(57) A pulsed light generation device includes a nonlinear optical crystal configured to cause first pulsed light emitted from a pulsed light source to enter, and to emit second pulsed light obtained by wavelength-converting the first pulsed light, and a diffraction grating that is disposed on an advancing path of the second pulsed light emitted from the nonlinear optical crystal and that is configured to emit third pulsed light obtained by reducing a ratio of an amount of change in pointing with respect to an amount of change in frequency of the entered pulsed light.

FIG. 1

**Description**

[Technical Field]

The present invention relates to a pulsed light generation device, a pulsed light generation method and a processing device.

Priority is claimed on Japanese Patent Application No. 2021-194049, filed November 30, 2021, the content of which is incorporated herein by reference.

[Background Art]

In the related art, a method of irradiating a workpiece with first laser ultra short pulsed light having a near infrared wavelength and second laser ultra short pulsed light, which is formed by wavelength-converting the first laser ultra short pulsed light using a nonlinear optical crystal unit and which has an ultraviolet wavelength, and efficiently processing the workpiece using the two types of laser ultra short pulsed light is known (for example, see Patent Document 1).

[Citation List]

[Patent Document]

[Patent Document 1]
Japanese Unexamined Patent Application, First Publication No. 2008-272794

[Summary of Invention]

[Solution to Problem]

An aspect of the present invention is a pulsed light generation device including a nonlinear optical crystal configured to cause first pulsed light emitted from a pulsed light source to enter, and to emit second pulsed light obtained by wavelength-converting the first pulsed light; and a diffraction grating that is disposed on an advancing path of the second pulsed light emitted from the nonlinear optical crystal and that is configured to emit third pulsed light obtained by reducing a ratio of an amount of change in pointing with respect to an amount of change in frequency of the entered pulsed light.

An aspect of the present invention is a pulsed light generation method including a step of emitting second pulsed light obtained by wavelength-converting first pulsed light entered from a pulsed light source toward a diffraction grating from a nonlinear optical crystal; and a step of emitting third pulsed light obtained by reducing a ratio of an amount of change in pointing with respect to an amount of change in frequency of the second pulsed light.

An aspect of the present invention is a processing device including a pulsed light source configured to emit first pulsed light; a nonlinear optical crystal configured to emit second pulsed light obtained by wavelength-converting the first pulsed light emitted from the pulsed light source; a diffraction grating that is disposed on an advancing path of the second pulsed light emitted from the nonlinear optical crystal and that is configured to emit third pulsed light obtained by reducing a ratio of an amount of change in pointing with respect to an amount of change in frequency of the entered pulsed light; and a processing part that is configured to irradiate a workpiece with the third pulsed light emitted from the diffraction grating and process the workpiece.

[Brief Description of Drawings]

FIG. 1 is a view showing a configuration of a pulsed light generation device according to an embodiment.
FIG. 2 is a view showing an aspect of second harmonic generation in a nonlinear optical crystal of the pulsed light generation device shown in FIG. 1.
FIG. 3 is a view for describing a tilt amount of pulsed light generated by a diffraction grating of the pulsed light generation device shown in FIG. 1.
FIG. 4 is a view showing a relation between an angle and a refractive index of the nonlinear optical crystal of the pulsed light generation device shown in FIG. 1.

FIG. 5 is a view showing a relation between a pulse surface of a second harmonic wave emitted from the nonlinear optical crystal of the pulsed light generation device shown in FIG. 1 and color dispersion by an angle of the second pulsed light.
FIG. 6 is a view showing correction of a pulse surface by the diffraction grating and correction of color dispersion of the pulsed light.
FIG. 7 is another view showing correction of a pulse surface by the diffraction grating and correction of color dispersion of the pulsed light.
FIG. 8 is a flowchart of a pulsed light generation method of the embodiment.
FIG. 9 is a view showing a configuration of a processing device of the embodiment.

[Description of Embodiments]

Hereinafter, an embodiment of the present invention will be described with reference to the accompanying drawings. The following detailed description of the embodiment is provided merely exemplarily and is not limiting. Throughout the drawings and the following detailed description, the same or similar reference signs are used.

[Pulsed light generation device]

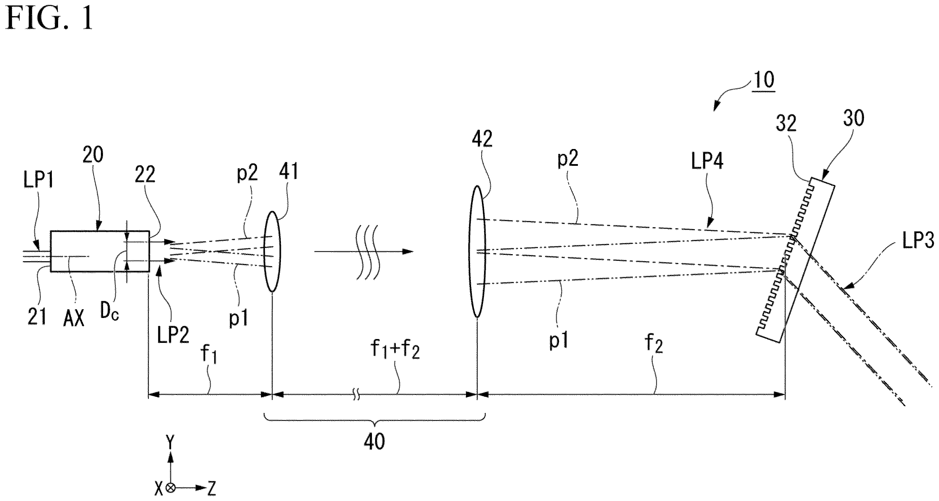

FIG. 1 is a view showing a configuration of a pulsed light generation device 10 of the embodiment. The pulsed light generation device 10 is a device configured to increase beam quality of pulsed light wavelength-converted by a nonlinear optical crystal using a diffraction grating. As shown in FIG. 1, the pulsed light generation device 10 includes at least a nonlinear optical crystal 20 and a diffraction grating 30, and further includes a magnification and reduction optical system (optical system) 40.

The nonlinear optical crystal 20 is a crystal configured to wavelength-convert first pulsed light LP1 emitted from a pulsed light source (not shown) and emit second pulsed light LP2 having a wavelength bandwidth different from the wavelength bandwidth of the first pulsed light LP1. The wavelength bandwidth of the second pulsed light LP2 is a region determined according to a use or the like of the pulsed light generation device 10, for example, an ultraviolet (UV) region or a visible region. The wavelength bandwidth of the first pulsed light LP1 is determined according to a wavelength bandwidth of the second pulsed light LP2 and a material of the nonlinear optical crystal 20, and for example, it is a near infrared (IR) region or a visible region.

A type of the nonlinear optical crystal 20 is a material that can wavelength-convert the first pulsed light LP1 emitted from the pulsed light source into the second pulsed light LP2 having the wavelength bandwidth determined as described above, and is appropriately selected in consideration of the wavelength bandwidth of the first pulsed light LP1, the wavelength bandwidth of the second pulsed light LP2, power required for the second pulsed light LP2, and the like. For example, when it is a visible region in which the wavelength bandwidth of the first pulsed light LP1 has a peak wavelength (a center wavelength) of 532 nm and a UV region in which the wavelength bandwidth of the second pulsed light LP2 has a peak wavelength (a center wavelength) of 266 nm, $CsLiB_6O_{10}$(CLBO) crystal, $\beta$-$BaB_2O_4$(BBO) crystal, and the like are exemplified as the nonlinear optical crystal 20.

The nonlinear optical crystal 20 of the embodiment wavelength-converts the entered first pulsed light LP1 (a fundamental wave, a center frequency $\omega_1$) into the second pulsed light LP2 (a second harmonic wave, a center frequency $\omega_2$). Hereinafter, "the center frequency" may be simply referred to as "a frequency." Here, second harmonic generation (SHG) assumes type I phase matching. That is, polarization of the first pulsed light LP1 is ordinary rays (o), and polarization of the second pulsed light LP2 is extraordinary rays (e).

In the specification and the drawings, a direction in which the first pulsed light LP1 entering the nonlinear optical crystal 20 advances is referred to as a Z direction. An optical axis AX of the first pulsed light LP1 is parallel to the Z direction. A YZ plane is parallel to the drawing of FIG. 1.

The diffraction grating 30 is disposed in a +Z direction from the nonlinear optical crystal 20 on the optical axis AX. The diffraction grating 30 has a grating surface 32 on which a plurality of gratings are formed at equal intervals. The gratings are parallel to the X axis. An angle formed between a normal line of the grating surface and the optical axis AX is an incidence angle $\theta i$. The diffraction grating 30 emits third pulsed light LP3 from fourth pulsed light (pulsed light) LP4 entering the grating surface 32. In the third pulsed light LP3, the ratio of the amount of change in pointing with respect to the amount of change in frequency is reduced compared to the fourth pulsed light LP4 entering the grating surface 32.

The magnification and reduction optical system 40 is disposed between the nonlinear optical crystal 20 and the diffraction grating 30 on the optical axis AX, and has a first lens 41 and a second lens 42. The first lens 41 is disposed between the nonlinear optical crystal 20 and the diffraction grating 30 on the optical axis AX. The second lens 42 is disposed between the first lens 41 and the diffraction grating 30 on the optical axis AX.

An emitting surface 22 of the nonlinear optical crystal 20 and the grating surface 32 of the diffraction grating 30 are disposed at positions conjugate to each other. Furthermore, a focal distance $f_1$ of the first lens 41 is smaller than

a focal distance $f_2$ of the second lens 42. The first lens 41 is disposed at a position separated from the emitting surface 22 by the focal distance $f_1$ in the +Z direction. The second lens 42 is disposed at a position separated from the first lens 41 by $(f_1+f_2)$ in the +Z direction and disposed at a position separated from the grating surface 32 by the focal distance $f_2$ in a -Z direction. That is, a distance between the first lens 41 and the second lens 42 is $(f_1+f_2)$.

In the pulsed light generation device 10 including the above-mentioned configuration and relative disposition of the components, in the nonlinear optical crystal 20, a center frequency $\omega_1$ of the first pulsed light LP1 is phase-matched, and the second pulsed light LP2 is generated. In the following description, the frequency may be used instead of wavelength. The phase mismatch amount in the SHG is expressed by Equation (1).

[Math. 1]

$$\Delta k = k_2 - 2k_1 \quad (1)$$

Here, $k_1$ indicates a wave number of the first pulsed light LP1, and $k_2$ indicates a wave number of the second pulsed light LP2. The change of the phase mismatch amount when the frequency $\omega_1$ is deviated by a frequency $\delta\omega_1$ is expressed by Equation (2).

[Math. 2]

$$\delta(\Delta k) = 2\sigma\delta\omega_1 = \sigma\delta\omega_2 \quad (2)$$

As shown in Equation (3), $\sigma$ indicates a difference between a reciprocal number of a group velocity vi of the first pulsed light LP1 and a reciprocal number of a group velocity $v_2$ of the second pulsed light LP2.

[Math. 3]

$$\sigma = \frac{\partial k_2}{\partial \omega_2} - \frac{\partial k_1}{\partial \omega_1} = \frac{1}{v_2} - \frac{1}{v_1} \quad (3)$$

Meanwhile, a change $\delta(\Delta k)$ in phase mismatch amount generated when pointing (a direction of $k_2$) of the second harmonic wave is inclined by $\delta\theta$ is expressed by Equation (4).

[Math. 4]

$$\delta(\Delta k) = k_2\delta n = k_2\frac{\partial n}{\partial \theta}\delta\theta = k_2\rho n\delta\theta \quad (4)$$

Here, n indicates a refractive index of the nonlinear optical crystal 20. $\rho$ indicates a walkoff angle of the nonlinear optical crystal 20. A change in pointing of the second harmonic wave when the fundamental wave frequency has changed by $\delta\omega_1$ (accordingly, a second harmonic wave frequency is $\delta\omega_2 = 2\times\delta\omega_1$) is considered. It is considered that the change in pointing occurs to compensate for the phase mismatch caused by the change in frequency. By equalizing Equations (2) and (4), the ratio of the change in pointing to the change in frequency can be obtained as Equation (5).

[Math. 5]

$$\alpha_c = n\frac{\delta\theta}{\delta\omega_2} = \frac{\sigma}{k_2\rho} \quad (5)$$

In Equation (5), the change in pointing is converted to the angle formed by the second pulsed light LP2 with respect to the optical axis AX observed outside of the nonlinear optical crystal 20. If the refractive index of the nonlinear optical crystal 20 is n, the angle observed outside the crystal is approximately n times the angle inside the nonlinear optical crystal 20.

Here, as an example of the pulsed light with a broad bandwidth, the first pulsed light LP1 and the second pulsed light LP2, spectral widths of which are expanded by self-phase modulation (SPM) generated in an optical fiber (not shown), are considered. Specifically, the pulsed light source (not shown) and the nonlinear optical crystal 20 are connected by an optical fiber, and the pulsed light emitted from the pulsed light source propagates through the core of the optical fiber and enters the nonlinear optical crystal 20 as the first pulsed light LP1. The change in frequency of the pulsed light, that is, chirp, is given by the time derivative of the amount of phase modulation. The frequency change of the second pulsed light LP2 is approximately twice the frequency change of the first pulsed light LP1. A value obtained by multiplying the frequency change of the second pulsed light LP2 by $\alpha_c$ of Equation (5) indicates a change in pointing of the second pulsed light LP2. That is, the pointing of the second pulsed light LP2 changes over time.

When the beam quality of the pulsed light is required, typically, the divergence angle is measured when viewed over the entire pulsed light (corresponding to integrating over time). The divergence angle obtained by integrating the pointing of the second pulsed light LP2 over time is greater than the divergence angle of the pulsed light with a narrow bandwidth without frequency change and therefore without time change of the pointing. That is, an M² factor of the second pulsed light LP2, a spectral width of which is expanded in the SPM, is greater than an M² factor of the pulsed light with a narrow bandwidth, a spectral width of which is not expanded (in this case, the M² factor is roughly proportional to the divergence angle). Here, considering that the change in pointing of the second pulsed light LP2 is proportional to the change in frequency, the diffraction grating 30, which is positioned in the +Z direction from the nonlinear optical crystal 20, can reduce or compensate for the change in pointing of the second pulsed light LP2, thereby suppressing the deterioration of the beam quality of the second pulsed light LP2.

When the relation between the pointing and the wavelength of the diffraction grating 30 is expressed by Equation (6), in the pulsed light generation device 10, at least Equation (7) is satisfied, and the change in pointing of the second pulsed light LP2 is reduced, suppressing the deterioration of beam quality.

[Math. 6]

$$\alpha_g = \frac{\partial \theta}{\partial \omega} \quad (6)$$

[Math. 7]

$$0 < \alpha_g \leq \alpha_c \quad (7)$$

In the pulsed light generation device 10, by disposing the diffraction grating 30 in the +Z direction from the nonlinear optical crystal 20, a change ($\alpha_g$) in pointing caused by the diffraction grating 30 is subtracted from a change ($\alpha_c$) in pointing caused by the nonlinear optical crystal 20, and finally, the third pulsed light LP3 with a smaller change ($\alpha_e$) in pointing in the +Z direction from the diffraction grating 30 is emitted. Here, $\alpha_e$ is expressed by Equation (8). Here, $\alpha_e$ is synonymous with "the ratio of the amount of change of pointing with respect to the amount of change of frequency of the third pulsed light LP3."

[Math. 8]

$$\alpha_e \approx \alpha_c - \alpha_g \quad (8)$$

As can be seen from Equation (8), when Equation (9) is satisfied, $\alpha_e$ approaches zero.

[Math. 9]

$$\alpha_g = \alpha_c \quad (9)$$

A diffraction condition of primary light of the diffraction grating 30 is expressed by Equation (10).

[Math. 10]

$$d\left(\sin\theta_i + \sin\theta_o\right) = \lambda \quad (10)$$

Here, d indicates a pitch of the plurality of gratings formed on the grating surface 32. Here, $\theta_i$ indicates an incidence angle of the fourth pulsed light LP4 to the grating surface 32. $\theta_o$ indicates an emitting angle of the third pulsed light LP3 from the grating surface 32. In the same equation, $\lambda$ indicates a center wavelength of the fourth pulsed light LP4, i.e., a center wavelength of the second pulsed light LP2. From Equation (10), an amount of change of the emitting

angle $\theta_o$ of the third pulsed light LP3 with respect to the amount of change of the wavelength is expressed by Equation (11).

[Math. 11]

$$\frac{\partial \theta_o}{\partial \lambda} = \frac{1}{d \cos \theta_o} \quad (1\,1)$$

When converting the wavelength $\lambda$ into the frequency $\omega$, $\alpha_g$ is expressed by Equation (12).

[Math. 12]

$$\alpha_g = \frac{\lambda^2}{2\pi c} \cdot \frac{1}{d \cos \theta_o} \quad (1\,2)$$

Here, c represents light speed. From Equation (12), it can be seen that when a pitch d of the grating surface 32 of the diffraction grating 30 becomes smaller, $\alpha_g$ becomes larger. However, even if the pitch d is made small enough to be practical and to a fabrication limit, when $\alpha_g$ is much smaller than $\alpha_c$, the effect of reducing $\alpha_c$ becomes excessively weak. In other words, there may be situations where the diffraction grating 30 is difficult to fabricate because the pitch d needed to achieve some effect of reducing $\alpha_c$ is too small. Here, in the pulsed light generation device 10, as described above, the magnification and reduction optical system 40 is disposed between the nonlinear optical crystal 20 and the diffraction grating 30 in the Z direction. The magnification and reduction optical system 40 appropriately magnifies or reduces the change in pointing of the beam of the second pulsed light LP2 which enters.

In the embodiment, the magnification and reduction optical system 40 magnifies or reduces the change in pointing of the beam of the second pulsed light LP2 by using the first lens 41 having the focal distance $f_1$ and the second lens 42 having the focal distance $f_2$, and converts it into the fourth pulsed light LP4. The first lens 41 and the second lens 42 constitute a so-called telescope. Each pulse component of the second pulsed light LP2 entering the magnification and reduction optical system 40 in the collimated state is emitted from the magnification and reduction optical system 40 while maintaining the collimated state. Further, in FIG. 1, in pulse components included in the second pulsed light LP2, only a pulse component p1 having the lowest frequency and a pulse component p2 having the highest frequency are shown.

As described above, the emitting surface 22 of the nonlinear optical crystal 20 and the grating surface 32 of the diffraction grating 30 are disposed at positions conjugate to each other. A clearance between the emitting surface 22 and the first lens 41 in the Z direction is equal to the focal distance $f_1$. A clearance between the first lens 41 and the second lens 42 in the Z direction is equal to $(f_1+f_2)$. A clearance between the second lens 42 and the grating surface 32 in the Z direction is equal to the focal distance $f_2$. In this case, when considering that the magnification of the pointing change of the magnification and reduction optical system 40 is $f_1/f_2$, Equation (9) is expressed by Equation (13).

[Math. 13]

$$\alpha_g \sim \alpha_c \frac{f_1}{f_2} \quad (1\,3)$$

In the diffraction of the pulsed light in the diffraction grating 30, a tilt of the pulse surface (a pulse front, defined on the basis of strength) occurs. When the pulse time width is short, the effect of the tilt of the pulse surface cannot be ignored. In the pulsed light generation device 10, when Equation (9) or Equation (13) is satisfied, the tilt of the pulse surface of the fourth pulsed light generated by the diffraction grating 30 and the tilt of the pulse surface of the second pulsed light generated by the nonlinear optical crystal 20 cancel each other out.

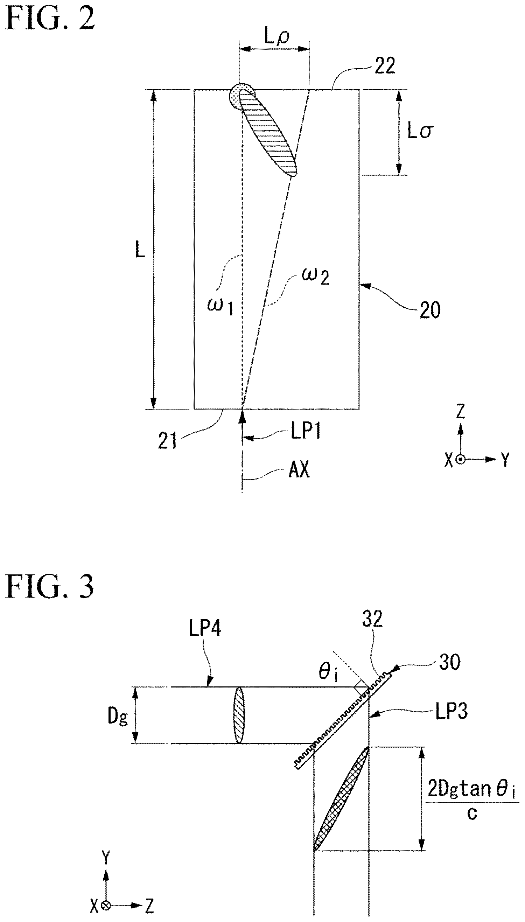

Hereinafter, a tilt amount of the pulse surface is expressed in time. FIG. 2 shows a process of the SHG in the nonlinear optical crystal 20 having a walkoff effect. It corresponds to a snap shot when the first pulsed light LP1 (fundamental wave, center frequency $\omega_1$) arrives at the emitting surface 22 of the nonlinear optical crystal 20. A second harmonic wave (center frequency $\omega_2$) generated near an incidence surface 21 of the nonlinear optical crystal 20 is spatially separated from the route of the first pulsed light LP1 in a ZY plane due to the walkoff effect, and is delayed in time from the first pulsed light LP1 due to the group velocity difference between the fundamental wave and the second harmonic wave. As a result, the pulse surface of the second harmonic wave emitted from the emitting surface 22 of the nonlinear optical crystal 20, i.e., the pulse surface of the second pulsed light LP2 is inclined with respect to the optical axis AX. A circular region depicted by the dot pattern in FIG. 2 is a schematic representation of the pulse surface of the first pulsed light LP1. An elliptical region depicted by the diagonal line in FIG. 2 is a schematic representation of the pulse surface of the second pulsed light LP2.

As expressed by Equation (3), since the aforementioned $\sigma$ is the difference in the reciprocal number of the group velocity between the fundamental wave and the second harmonic wave, a tilt amount $\Delta\tau_c$ generated in the nonlinear optical crystal 20 is expressed as in Equation (14).

[Math. 14]

$$\Delta\tau_c = L\sigma \quad (1\,4)$$

Here, L indicates a length of the nonlinear optical crystal 20 in the Z direction. FIG. 3 is a view for describing a tilt amount of the pulsed light generated by the diffraction grating 30. An elliptical region depicted by a diagonal line in FIG. 3 is a schematic presentation of the pulse surface of the fourth pulsed light LP4 entering the diffraction grating 30. (Here, for the sake of explanation, it is assumed that the pulse surface of the fourth pulsed light LP4 is not tilted.) An elliptical region depicted by a mesh in FIG. 3 is a schematic representation of the pulse surface of the third pulsed light LP3. As shown in FIG. 3, a tilt amount $\Delta\tau_g$ generated by the diffraction grating 30 is expressed by Equation (15).

[Math. 15]

$$\Delta\tau_g = \frac{2D_g \tan\theta_i}{c} \quad (1\,5)$$

Here, $D_g$ indicates a beam diameter of the fourth pulsed light LP4 in the X direction and the Y direction. $\theta_i$ indicates an incidence angle of the fourth pulsed light LP4 to the grating surface 32. Here, when deriving Equation (15), it is assumed that the incidence angle $\theta_i$ of the fourth pulsed light LP4 to the grating surface 32 and the emitting angle $\theta_o$ of the third pulsed light LP3 from the grating surface 32 are equal to each other, i.e., Equation (16) is satisfied.

[Math. 16]

$$\theta_i \sim \theta_o \quad (1\,6)$$

In the pulsed light generation device 10, in order to prevent deterioration of the beam quality of the third pulsed light LP3 emitted from the diffraction grating 30, at least $\Delta\tau_g \leq \Delta\tau_c$, and preferably $\Delta\tau_g = \Delta\tau_c$. A beam diameter Dc of the second pulsed light LP2 on the emitting surface 22 of the nonlinear optical crystal 20 is given by Equation (17).

[Math. 17]

$$D_c = L\rho \quad (1\,7)$$

Since the magnification and reduction optical system 40 having a lateral magnification ($f_2/f_1$) is disposed between the emitting surface 22 of the nonlinear optical crystal 20 and the grating surface 32 of the diffraction grating 30 in the Z direction as described above, Equation (18) is obtained.

[Math. 18]

$$\frac{D_g}{D_c} = \frac{f_2}{f_1} \quad (1\,8)$$

Accordingly, when Equation (13) is satisfied, Equation (19) is obtained.

[Math. 19]

$$D_g = \frac{\alpha_c}{\alpha_g} D_c \quad (1\,9)$$

Accordingly, Equation (20) is obtained by substituting Equations (5), (12), (14), (17) and (19) in Equation (15).

[Math. 20]

$$\Delta\tau_g = 2\frac{\Delta\tau_c}{\lambda}d\sin\theta_i \quad (20)$$

As described, as shown in Equation (16), since it is assumed that the incidence angle $\theta_i$ and the emitting angle $\theta_o$ are equal to each other, a diffraction condition of Equation (10) is expressed as in Equation (21).

[Math. 21]

$$2d\sin\theta_i = \lambda \quad (21)$$

According to Equations (20) and (21), it can be seen that $\Delta\tau_c = \Delta\tau_g$ is satisfied. That is, it can be seen that, when the diffraction grating 30 is disposed to cancel out the angle dispersion generated by the nonlinear optical crystal 20 (Equation (13)), the tilt of the pulse surface of the fourth pulsed light LP4 is also cancelled out, resulting in the third pulsed light LP3, which has a smaller tilt of the pulse surface tilt (ideally no tilt at all). Here, $\Delta\tau_c = \Delta\tau_g$ expresses a most preferable state. In general, when the diffraction grating 30 is disposed to reduce the angle dispersion caused by the nonlinear optical crystal 20, the tilt of the pulse surface of the fourth pulsed light LP4 is also reduced ($\Delta\tau_c \geq \Delta\tau_g > 0$).

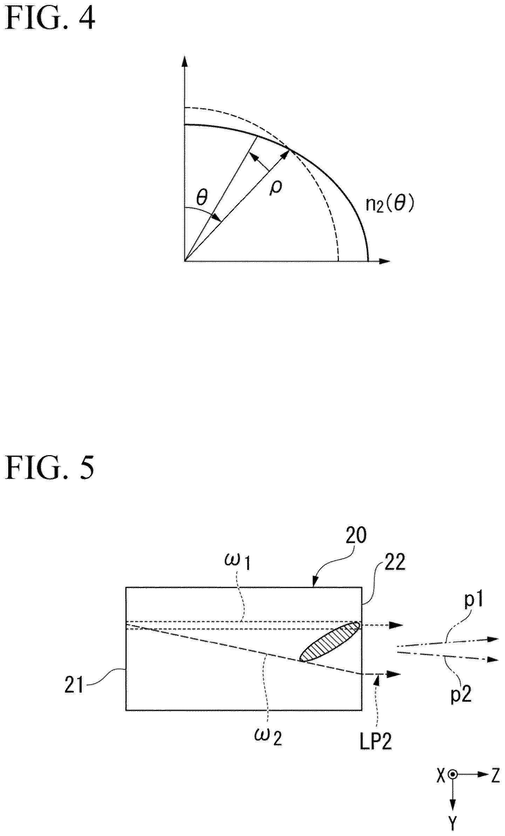

Further, in the above-mentioned description, for example, since it is $\delta(\Delta k) > 0$ for $\delta\omega_2 > 0$ (Equation (2)) since it is $\sigma > 0$ when light of a UV region is generated from light (pulsed light) in a visible region by the SHG. In order to correct and reduce a change $\delta(\Delta k)$ in the phase mismatch amount, the change $\delta(\Delta k)$ in the phase mismatch amount due to the change in pointing should be negative, and a wave number $k_2$ needs to be reduced. That is, as can be seen from FIG. 4, it is necessary to reduce the refractive index $n_2$, and to do so, the direction of the wave number $k_2$ should be changed to the same direction as the walkoff direction. FIG. 4 shows a refractive index of a positive uniaxial crystal as a function of an angle from an optical axis (a longitudinal axis of the drawing) as an example. A solid line shows a refractive index of the second harmonic wave, and a dotted line shows a refractive index of the fundamental wave. A vector connecting the intersection between the solid line and the dotted line and the origin indicates the direction of the wave numbers $k_1$ and $k_2$ during phase matching. The direction shown by $\rho$ is a walkoff direction.

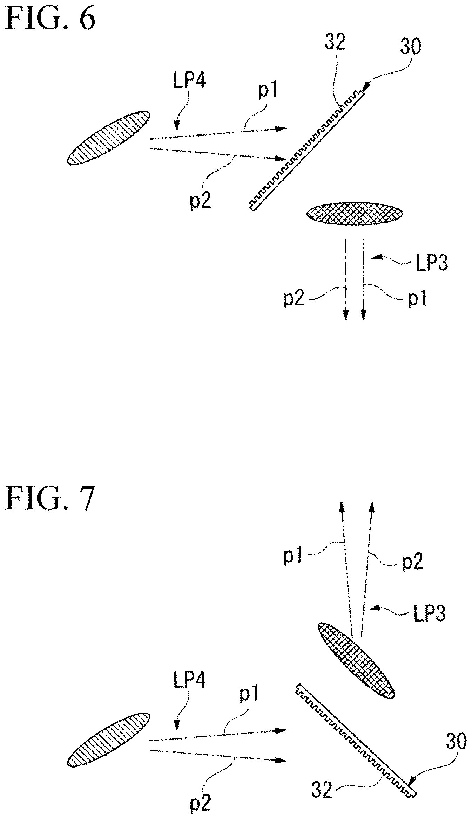

FIG. 5 shows a pulse surface of the second pulsed light LP2 emitted from the nonlinear optical crystal 20 and a change in pointing by the frequency. As described above, a component with a high frequency (a component with a short wavelength) is emitted in the walkoff direction, i.e., a direction of the pulse component p2. A component with a low frequency (a component with a long wavelength) is emitted in an opposite direction of the walkoff, i.e., a direction of the pulse component p1. FIG. 6 is a view showing correction of the pulse surface by the diffraction grating and correction of the pointing change by the frequency. A diffraction angle of the pulse component p1 with a low frequency is greater than a diffraction angle of the pulse component p2 with a high frequency. From FIG. 6, it can be seen that both the tilt of the pulse surface and the pointing change due to the frequency change are corrected. That is, this is the direction that reduces the tilt and pointing changes of the pulse surface that occur during wavelength conversion, not the direction that increases it. If the direction of the diffraction caused by the diffraction grating in FIG. 6 is reversed (FIG. 7), the change in pointing and the tilt of the pulse surface will increase. That is, to obtain high beam quality, it is necessary to properly select the direction of diffraction by the diffraction grating relative to the walkoff direction of the nonlinear optical crystal.

Further, since the dispersion prism also produces a pointing change with respect to the frequency change, it is also possible to use a dispersion prism instead of the diffraction grating.

[Numerical example]

A numerical example of generating pulsed light using the above-mentioned pulsed light generation device 10 will be described. For example, the SHG of the first pulsed light LP1 with a peak wavelength (center wavelength) of 532 nm was assumed using a CLBO crystal as the nonlinear optical crystal 20. In this case, for a walkoff angle $\rho$, $\rho = 0.032$[rad.]. For a group refractive index difference $\Delta n_g$ between the fundamental wave and the second harmonic wave, $\Delta n_g = 0.098$.

From Equation (5), a relation between the change in wavelength and the change in pointing in the process of SHG in the nonlinear optical crystal 20 is calculated as in Equation (22).

[Math. 22]

$$\frac{\partial \theta}{\partial \lambda} = \frac{2\pi c}{\lambda^2} \alpha_c = \frac{\Delta n_g}{\lambda \rho} \sim 11.5 \ [mrad/nm] \qquad (22)$$

When the pitch d of the diffraction grating 30 is d = 333 nm, the number of lines is 3000/mm, and the incidence angle $\theta_i$ and the emitting angle $\theta_o$ are $\theta i \approx \theta_o \approx 23.5$[deg.], Equation (23) can be obtained from Equation (11).

[Math. 23]

$$\frac{\partial \theta}{\partial \lambda} \sim 3.3 \ [mrad/nm] \qquad (23)$$

Accordingly, on the basis of Equation (13), by setting $(f_1/f_2) \approx 0.29$, $\alpha_c$ of the second pulsed light LP2 emitted from the CLBO crystal can be reduced to generate the fourth pulsed light LP4, the amount of change in pointing of the fourth pulsed light LP4 can be reduced using the diffraction grating 30, and thus, the third pulsed light LP3 with less deterioration of the beam quality can be obtained. In order to obtain $(f_1/f_2) \approx 0.29$, for example, the focal distance $f_1$ of the first lens 41 may be set to $f_1 \approx 50$ mm, and the focal distance $f_2$ of the second lens 42 may be set to $f_2 \approx 170$ mm.

[Pulsed light generation method]

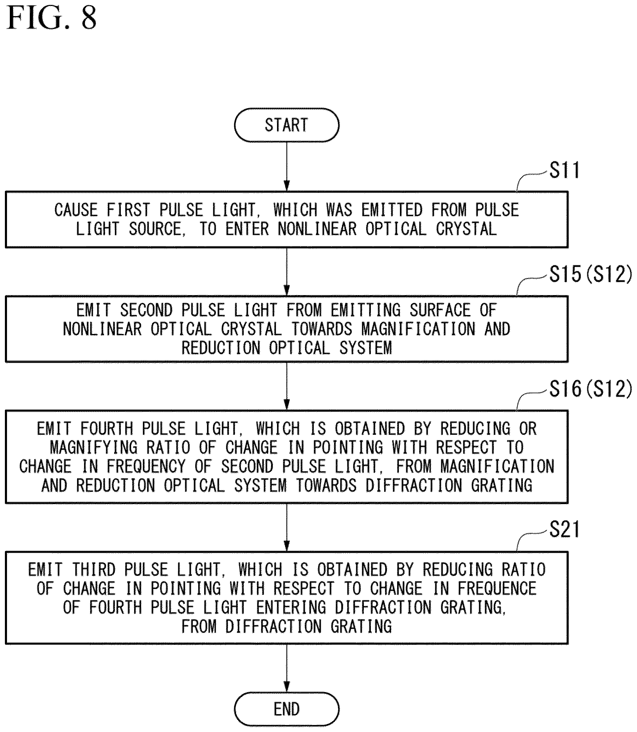

A pulsed light generation method of the embodiment is a method of generating pulsed light while suppressing deterioration of beam quality using the pulsed light generation device 10. FIG. 8 is a flowchart of the pulsed light generation method of the embodiment. In the pulsed light generation method of the embodiment, the first pulsed light LP1 emitted from the pulsed light source (not shown) in the pulsed light generation device 10 enters the nonlinear optical crystal 20 from the incidence surface 21 (step S11). The first pulsed light LP1 is wavelength-converted into the second pulsed light LP2 by the nonlinear optical crystal 20.

Next, the second pulsed light LP2 obtained by wavelength-converting the entered first pulsed light LP1 is emitted from the nonlinear optical crystal 20 toward the diffraction grating 30 via the magnification and reduction optical system 40 in the +Z direction (step S12). In this step S12, specifically, first, the second pulsed light LP2 is emitted from the emitting surface 22 of the nonlinear optical crystal 20 toward the magnification and reduction optical system 40 in the +Z direction (step S15). Next, the fourth pulsed light LP4, in which the amount of change in the emitting angle by the frequency change of the second pulsed light LP2 is reduced or magnified, is emitted from the magnification and reduction optical system 40 toward the diffraction grating 30 in the +Z direction (step S16).

Next, the third pulsed light LP3, in which a ratio of the amount of change in pointing by the frequency change of the fourth pulsed light LP4 emitted from the magnification and reduction optical system 40 and entering the diffraction grating 30 is reduced, is emitted from the grating surface 32 of the diffraction grating 30 (step S21).

By executing the above-mentioned steps S11, S15, S16 and S21, the third pulsed light LP3 can be generated by reducing the ratio $\alpha_c$ of the second pulsed light LP2 from the second pulsed light LP2 emitted from the emitting surface 22 of the nonlinear optical crystal 20, and the third pulsed light LP3 can be emitted from the diffraction grating 30. In addition, by executing the above-mentioned steps S11, S15, S16 and S21, deterioration of beam quality of the second pulsed light LP2 can be suppressed.

[Processing device]

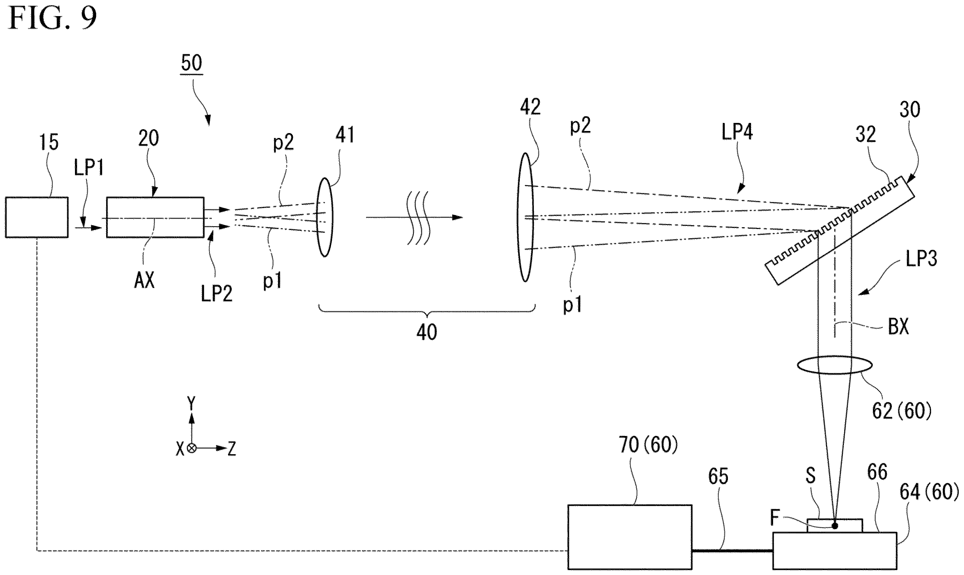

A processing device 50 of the embodiment includes a pulsed light source 15, a nonlinear optical crystal 20, a diffraction grating 30, and a processing part 60. Further, in the components of the processing device 50 and functions thereof, components common to the pulsed light generation device 10 are designated by the same reference sign as the corresponding components of the pulsed light generation device 10, the functions and detailed description thereof will be omitted. FIG. 9 is a view showing a configuration of the processing device 50. The processing device 50 includes a pulsed light source 15 and a processing part 60, in addition to the components of the pulsed light generation device 10.

The pulsed light source 15 emits the first pulsed light LP1. While the peak wavelength (center wavelength) or the pulse width of the first pulsed light LP1 is not limited to a specified value, it is appropriately selected in consideration of a value or a condition showing absorption properties of a workpiece S, or a value or a condition showing sensitivity of the workpiece S such that desired processing on the workpiece S becomes possible. Specifically, the peak wavelength (center wavelength) or the pulse width of the first pulsed light LP1 is set so as to generate the second pulsed light LP2 having a wavelength bandwidth that enables desired processing with respect to the workpiece S using a wavelength-converting function of the nonlinear optical crystal 20. The first pulsed light LP1 emitted from the pulsed light source 15 enters the nonlinear optical crystal 20 from the incidence surface 21.

The processing part 60 irradiates the workpiece S with the third pulsed light LP3 emitted from the diffraction grating 30, and processes the workpiece S. The processing part 60 includes, for example, a condensing lens 62, a stage 64, and a control device 70. The condensing lens 62 images the third pulsed light LP3 emitted from the diffraction grating 30 on an optical axis BX (course) of the third pulsed light LP3. In order to maintain the beam quality of the third pulsed light LP3, it is preferable that the main surface of the condensing lens 62 is disposed parallel to the pulse surface of the third pulsed light LP3.

The stage 64 has a placing surface 66 on which the workpiece S is placed, for example, is formed in a rectangular shape when seen along the optical axis BX parallel to the Y direction, and has a predetermined thickness in the Y direction parallel to the optical axis BX. The stage 64 is disposed on the -Y side of the condensing lens 62 such that a focus F of the third pulsed light LP3 condensed by the condensing lens 62 is irradiated to a predetermined position of the workpiece S placed on the placing surface 66. That is, a clearance between the condensing lens 62 and the predetermined position of the workpiece S in the Y direction is similar to the focal distance of the condensing lens 62. The condensing lens 62 irradiates the workpiece S with the third pulsed light LP3 emitted from the diffraction grating 30 by condensing the third pulsed light LP3 to the focus F.

The control device 70 is configured to move the stage 64 such that the focus F moves to a desired processing region of the workpiece S. Further, when the desired processing region is one point, there is no need to move the stage 64. That is, the control device 70 controls a position in each direction of the X direction, the Y direction and the Z direction of the stage 64. The control device 70 is connected to the stage 64 in a wired manner, for example, an electric cable 65 or the like, or a wireless manner. The control device 70 is configured to be able to switch on and off the emission of the first pulsed light LP1 from the pulsed light source 15 in conjunction with the positioning of the stage 64, and to be able to control the emitting power or the like of the first pulsed light LP1. The control device 70 is connected to the pulsed light source 15 in a wired manner, for example, an electric cable 68 or the like, or a wireless manner.

The processing part 60 can condense the third pulsed light LP3 emitted from the diffraction grating 30 to the focus F in the desired processing region of the workpiece S using the condensing lens 62, relatively move the focus F in the processing region of the workpiece S by moving or stopping the stage 64 using the control device 70, and process the workpiece S in a desired pattern by controlling the power of the first pulsed light LP1 from the pulsed light source 15.

Since the processing device 50 includes the components of the pulsed light generation device 10, the workpiece S is irradiated with the third pulsed light LP3 with the reduced beam quality deterioration, resulting in high processing accuracy.

As described above, the pulsed light generation device 10 of the embodiment includes the nonlinear optical crystal 20 and the diffraction grating 30. The nonlinear optical crystal 20 receives the first pulsed light LP1 emitted from the pulsed light source and emits the second pulsed light LP2 wavelength-converted from the first pulsed light LP1. The diffraction grating 30 is disposed on a course of the second pulsed light LP2 emitted from the nonlinear optical crystal 20. The diffraction grating 30 emits the third pulsed light LP3 obtained by reducing the ratio $\alpha_c$ of the change in pointing with respect to the change in frequency of the entered fourth pulsed light (pulsed light ) LP4. According to the pulsed light generation device 10 of the embodiment, spatial distortion and temporal distortion of the pulsed light generated upon wavelength conversion by the nonlinear optical crystal 20 can be simply corrected by the diffraction grating 30, and the third pulsed light LP3 with good beam quality can be obtained.

According to the pulsed light generation device 10 of the embodiment, as described with reference to FIG. 5 and FIG. 6, both the inclination of the pulse surface of the second pulsed light LP2 and the change in pointing by the change in frequency can be efficiently corrected by a simple optical system using the diffraction grating 30.

In addition, the pulsed light generation device 10 of the embodiment further includes the magnification and reduction optical system 40. The magnification and reduction optical system 40 is disposed between the nonlinear optical crystal 20 and the diffraction grating 30 on the advancing path of the second pulsed light LP2 emitted from the nonlinear optical crystal 20. The magnification and reduction optical system 40 emits the fourth pulsed light LP4 in which the amount of change in pointing for each frequency component of the second pulsed light PL2 entered from the nonlinear optical crystal 20 is reduced. In such a configuration, the diffraction grating 30 emits the pulsed light, in which the ratio of the amount of change in pointing of the fourth pulsed light LP4 entered from the magnification and reduction optical system 40 is reduced, as the third pulsed light LP3. According to the pulsed light generation device 10 described above, even when it is difficult to fabricate the diffraction grating 30 because the pitch d required for directly subtract the $\alpha_c$ of the second pulsed light LP2 by using the diffraction grating 30, it is possible to obtain a ratio in which the $\alpha_c$ is appropriately reduced by the diffraction grating 30 by previously subtracting the $\alpha_c$ of the second pulsed light LP2 using the magnification and reduction optical system 40.

Further, in the pulsed light generation device 10 of the above-mentioned embodiment, assuming that $\alpha_g < \alpha_c$, the magnification and reduction optical system 40 reduces the $\alpha_c$ of the second pulsed light LP2. If $\alpha_g > \alpha_c$, it is preferable that the magnification and reduction optical system 40 increases the $\alpha_c$ of the second pulsed light LP2. That is, whether the magnification and reduction optical system 40 reduces or magnifies the $\alpha_c$ of the second pulsed light LP2 depends on the magnitude relationship between $\alpha_c$ and $\alpha_g$.

Further, while the pulsed light generation device 10 of the embodiment includes the magnification and reduction optical system 40, when the $\alpha_c$ of the second pulsed light LP2 and the $\alpha_g$ of the diffraction grating 30 are relatively close and the desired effect can be obtained by directly subtracting the $\alpha_c$ by the $\alpha_g$ of the diffraction grating 30, the magnification and reduction optical system 40 may be omitted. In this case, the fourth pulsed light LP4 entering the grating surface 32 of the diffraction grating 30 in the pulsed light generation device 10 of the embodiment may be replaced with the second pulsed light LP2.

In addition, in the pulsed light generation device 10 of the embodiment, the magnification and reduction optical system 40 has the first lens 41 and the second lens 42. The first lens 41 is disposed between the nonlinear optical crystal 20 and the diffraction grating 30. The second lens 42 is disposed between the first lens 41 and the diffraction grating 30. The emitting surface 22 of the nonlinear optical crystal 20 and the grating surface 32 of the diffraction grating are disposed at positions conjugate to each other. In addition, when the collimated light enters the magnification and reduction optical system 40, it is output as collimated light. That is, the first lens 41 and the second lens 42 constitute a so-called 4f optical system between the nonlinear optical crystal 20 and the diffraction grating 30. When the magnification and reduction optical system 40 reduces the pointing change $\alpha_c$ of the second pulsed light LP2, the focal distance $f_1$ of the first lens 41 is smaller than the focal distance $f_2$ of the second lens 42. According to the pulsed light generation device 10 of the embodiment, the magnification and reduction optical system 40 can be realized by a simple configuration constituted by the 4f optical system using the first lens 41 and the second lens 42. In addition, the focal distances $f_1$ and $f_2$ can be determined independently of each other, and the magnification of the magnification and reduction optical system 40 can be adjusted freely and accurately.

Further, in the pulsed light generation device 10 of the embodiment, the magnification of the magnification and reduction optical system 40 is determined by a magnitude relation between $\alpha_c$ and $\alpha_g$. If $\alpha_g > \alpha_c$ as in the above-mentioned variant, the focal distance $f_1$ of the first lens 41 is longer than the focal distance $f_2$ of the second lens 42, and $\alpha_c$ is increased.

The pulsed light generation method of the embodiment includes at least a first step and a second step. In the first step, the second pulsed light LP2 obtained by wavelength-converting the first pulsed light LP1 entering from the pulsed light source is emitted from the nonlinear optical crystal 20 toward the diffraction grating 30 (steps S11 and S12). Next, in the second step, the third pulsed light LP3 obtained by reducing the pointing change using the frequency component of the second pulsed light LP2 is emitted from the diffraction grating 30 (step S21). In the pulsed light generation method of the embodiment, since the magnification and reduction optical system 40 is disposed between the nonlinear optical crystal 20 and the diffraction grating 30, the above-mentioned "pulsed light entering the grating surface 32 of the diffraction grating 30" means the fourth pulsed light LP4 emitted from the magnification and reduction optical system 40.

According to the pulsed light generation method of the embodiment, the second pulsed light LP2 emitted from the nonlinear optical crystal 20 is passed through the magnification and reduction optical system 40 and the diffraction grating 30 to generate the third pulsed light LP3 by reducing the $\alpha_c$ of the second pulsed light LP2, and the third pulsed light LP3 can be emitted from the diffraction grating 30. In addition, according to the pulsed light generation method of the embodiment, deterioration of the beam quality of the second pulsed light LP2 can be efficiently suppressed.

Further, as described above for the pulsed light generation device 10 of this embodiment, if $\alpha_c$ and $\alpha_g$ are close to each other, the magnification and reduction optical system 40 can be omitted. When the magnification and reduction optical system 40 is omitted, without performing the above-mentioned step S16, the second pulsed light LP2 is directly emitted from the emitting surface 22 of the nonlinear optical crystal 20 toward the diffraction grating 30 in step S15, and step S21 is performed. In this case, the above-mentioned "pulsed light entering the grating surface 32 of the diffraction grating 30" means the second pulsed light LP2 emitted from the nonlinear optical crystal 20.

The processing device 50 of the embodiment includes the pulsed light source 15, the nonlinear optical crystal 20, the diffraction grating 30, and the processing part 60. The pulsed light source 15 emits the first pulsed light LP1. The nonlinear optical crystal 20 emits the second pulsed light LP2 obtained by wavelength-converting the first pulsed light LP1 emitted from the pulsed light source 15. The diffraction grating 30 is disposed on an advancing path of the second pulsed light LP2 emitted from the nonlinear optical crystal 20, and emits the third pulsed light LP3 obtained by reducing the ratio of the amount of change in pointing with respect to the amount of change in frequency of the entering fourth pulsed light LP4. The processing part 60 irradiates the workpiece S with the third pulsed light LP3 emitted from the diffraction grating 30 and processes the workpiece S. According to the processing device 50 of the embodiment, the first pulsed light LP1 emitted from the pulsed light source 15 is wavelength-converted into the second pulsed light LP2 having a wavelength bandwidth appropriate for the processing of the workpiece S by the nonlinear optical crystal 20, and the $\alpha_c$ of the second pulsed light LP2 can be reduced using the same disposition configuration as the pulsed light generation device 10. In addition, according to the processing device 50 of the embodiment, the workpiece S can be processed using the third pulsed light LP3 with good beam quality emitted from the diffraction grating 30, and high processing accuracy can be obtained.

Further, as described in the pulsed light generation method of the embodiment, when $\alpha_c$ and $\alpha_g$ are close to each other, the magnification and reduction optical system 40 in the processing device 50 can be omitted. In this case, the second pulsed light LP2 emitted from the nonlinear optical crystal 20 directly enters the grating surface 32 of the diffraction grating 30.

Hereinabove, while the embodiment has been described in detail with reference to the accompanying drawings, a specific configuration is not limited to the embodiment and may include designs or the like without departing from the scope of the present invention.

For example, the pulsed light generation device 10 may further include the pulsed light source 15 that emits the first pulsed light LP1. For example, the first pulsed light LP1 is a short pulse, but the parameters and characteristics such as the pulse width of each of the first pulsed light LP1 and the second pulsed light LP2 are not limited to specific values and are set appropriately depending on the application of the pulsed light generation device 10. The diffraction grating 30 may be constituted by an active element such as a liquid crystal spatial modulator or the like.

For example, in the processing device 50, the processing part 60 is not limited to being equipped with the condensing lens 62, the stage 64, and the control device 70, but is not particularly limited as long as it is configured to be capable of irradiating the workpiece S with the third pulsed light LP3 emitted from the diffraction grating 30 and processing the workpiece S.

In addition, the pulsed light generation device of the embodiment including the pulsed light generation device 10 and at least the nonlinear optical crystal and the diffraction grating may be applied to a pulse generating part in an exposure device or a measurement device, in addition to the processing device.

[Reference Signs List]

10...pulsed light generation device, 15...pulsed light source, 20... nonlinear optical crystal, 22...emitting surface, 30... diffraction grating, 32...grating surface, 40... magnification and reduction optical system, 41...first lens, 42... second lens, 50...processing device, 60...processing part, $f_1$, $f_2$...focal distance, LP1...first pulsed light, LP2... second pulsed light, LP3...third pulsed light, LP4... fourth pulsed light, S...workpiece

**Claims**

1. A pulsed light generation device comprising:

   a nonlinear optical crystal configured to cause first pulsed light emitted from a pulsed light source to enter, and to emit second pulsed light obtained by wavelength-converting the first pulsed light; and
   a diffraction grating that is disposed on an advancing path of the second pulsed light emitted from the nonlinear optical crystal and that is configured to emit third pulsed light obtained by reducing a ratio of an amount of change in pointing with respect to an amount of change in frequency of the entered pulsed light.

2. The pulsed light generation device according to claim 1, further comprising an optical system that is disposed between the nonlinear optical crystal and the diffraction grating on the advancing path, and that is configured to emit fourth pulsed light obtained by reducing or magnifying an amount of change in pointing with respect to an amount of change in frequency of the second pulsed light entered from the nonlinear optical crystal,
   wherein the diffraction grating emits a pulsed light obtained by reducing a ratio of the amount of change of the entered fourth pulsed light as the third pulsed light.

3. The pulsed light generation device according to claim 2, wherein the optical system has

   a first lens disposed between the nonlinear optical crystal and the diffraction grating on the advancing path, and
   a second lens disposed between the first lens and the diffraction grating on the advancing path,
   wherein an emitting surface of the nonlinear optical crystal and a grating surface of the diffraction grating are disposed at positions conjugate to each other.

4. The pulsed light generation device according to claim 3, wherein, when a focal distance of the first lens is expressed as fi and a focal distance of the second lens is expressed as $f_2$, a distance between the first lens and the second lens is $(f_1+f_2)$.

5. The pulsed light generation device according to claim 4, wherein, when a change in pointing by the nonlinear optical crystal is expressed as $\alpha_c$ and a change in pointing by the diffraction grating is expressed as $\alpha_g$, Equation (1) shown below is satisfied.
[Math. 1]

$$\alpha_g \sim \alpha_c \frac{f_1}{f_2} \quad (1)$$

6. The pulsed light generation device according to any one of claims 1 to 5, wherein an incidence angle of the pulsed light to a grating surface of the diffraction grating is substantially equal to an emitting angle of the third pulsed light from the grating surface.

7. A pulsed light generation method comprising:

a step of emitting second pulsed light obtained by wavelength-converting first pulsed light entered from a pulsed light source toward a diffraction grating from a nonlinear optical crystal; and
a step of emitting third pulsed light obtained by reducing a ratio of an amount of change in pointing with respect to an amount of change in frequency of the second pulsed light.

8. A processing device comprising:

a pulsed light source configured to emit first pulsed light;
a nonlinear optical crystal configured to emit second pulsed light obtained by wavelength-converting the first pulsed light emitted from the pulsed light source;
a diffraction grating that is disposed on an advancing path of the second pulsed light emitted from the nonlinear optical crystal and that is configured to emit third pulsed light obtained by reducing a ratio of an amount of change in pointing with respect to an amount of change in frequency of the entered pulsed light; and
a processing part that is configured to irradiate a workpiece with the third pulsed light emitted from the diffraction grating and to process the workpiece.

FIG. 1

EP 4 443 230 A1

FIG. 2

FIG. 3

FIG. 4

FIG. 5

FIG. 6

FIG. 7

# FIG. 8

START

CAUSE FIRST PULSE LIGHT, WHICH WAS EMITTED FROM PULSE LIGHT SOURCE, TO ENTER NONLINEAR OPTICAL CRYSTAL ⌒S11

EMIT SECOND PULSE LIGHT FROM EMITTING SURFACE OF NONLINEAR OPTICAL CRYSTAL TOWARDS MAGNIFICATION AND REDUCTION OPTICAL SYSTEM ⌒S15(S12)

EMIT FOURTH PULSE LIGHT, WHICH IS OBTAINED BY REDUCING OR MAGNIFYING RATIO OF CHANGE IN POINTING WITH RESPECT TO CHANGE IN FREQUENCY OF SECOND PULSE LIGHT, FROM MAGNIFICATION AND REDUCTION OPTICAL SYSTEM TOWARDS DIFFRACTION GRATING ⌒S16(S12)

EMIT THIRD PULSE LIGHT, WHICH IS OBTAINED BY REDUCING RATIO OF CHANGE IN POINTING WITH RESPECT TO CHANGE IN FREQUENCE OF FOURTH PULSE LIGHT ENTERING DIFFRACTION GRATING, FROM DIFFRACTION GRATING ⌒S21

END

FIG. 9

EP 4 443 230 A1

# INTERNATIONAL SEARCH REPORT

| International application No. |
|---|
| **PCT/JP2022/039965** |

### A. CLASSIFICATION OF SUBJECT MATTER

***G02F 1/37***(2006.01)i; ***B23K 26/062***(2014.01)i
FI: G02F1/37; B23K26/062

According to International Patent Classification (IPC) or to both national classification and IPC

### B. FIELDS SEARCHED

Minimum documentation searched (classification system followed by classification symbols)

G02F1/00-1/125; G02F1/21-7/00; B23K26/00-26/70

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-500656 A (SHARP CORP.) 10 January 2019 (2019-01-10) paragraphs [0009]-[0069], [0096]-[0100], fig. 14(b)-14(c), 21 | 1–3, 6–7 |
| Y | | 4–6, 8 |
| Y | JP 2016-532882 A (IPG PHOTONICS CORP.) 20 October 2016 (2016-10-20) paragraph [0071], fig. 2B | 4-6 |
| Y | US 8422119 B1 (KEATON et al.) 16 April 2013 (2013-04-16) column 14, lines 35-50, fig. 7 | 4-6 |
| Y | JP 2001-264687 A (NEC CORP.) 26 September 2001 (2001-09-26) paragraph [0023], fig. 4 (b) | 4-6 |
| Y | JP 2004-502551 A (ELECTRO SCIENTIFIC INDUSTRIES, INC.) 29 January 2004 (2004-01-29) paragraphs [0018]-[0059], fig. 3, 4 | 8 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 December 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/039965**

| Patent document cited in search report | | | Publication date (day/month/year) | Patent family member(s) | Publication date (day/month/year) |
|---|---|---|---|---|---|
| JP | 2019-500656 | A | 10 January 2019 | US 2017/0179674 A1<br>paragraphs [0071]-[0147],<br>[0178]-[0182], fig.14(b)-14(c),<br>21<br>CN 108474994 A | |
| JP | 2016-532882 | A | 20 October 2016 | US 2017/0299943 A1<br>paragraph [0093], fig. 2B<br>KR 10-2015-0129021 A<br>CN 105210245 A | |
| US | 8422119 | B1 | 16 April 2013 | (Family: none) | |
| JP | 2001-264687 | A | 26 September 2001 | (Family: none) | |
| JP | 2004-502551 | A | 29 January 2004 | US 2002/0005396 A1<br>paragraphs [0027]-[0068], fig.<br>3, 4<br>CN 1441963 A<br>KR 10-0773070 B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021194049 A
- JP 2008272794 A